# EUROPEAN PATENT APPLICATION

(11) **EP 4 213 522 A1**
(43) Date of publication of application: **19.07.2023**
(21) Application number: 22151426.8
(22) Date of filing: 13.01.2022
(51) Int. Cl.: H04W 12/121, H04W 4/40, H04L 9/40

(54) **VEHICLE EXPANSION BOX AND VEHICLE**

(71) Applicant: Rohde & Schwarz GmbH & Co. KG, 81671 München (DE)
(72) Inventor: Wong, KokMeng, 81671 München (DE); Venkatram, Ashwin, 81671 München (DE); Hamid, HassanulHadi, 81671 München (DE); Durai, Rajashekar, 81671 München (DE)
(74) Representative: Prinz & Partner mbB

(57) **Abstract**

The invention relates to a vehicle expansion box for implementation in a vehicle (10). The vehicle expansion box (16) comprises a wireless module (20) configured to receive a radio frequency signal. The wireless module (20) is configured to generate IQ data based on the radio frequency signal received. A recording module (22) is provided that is connected with the wireless module (20). The recording module (22) has a first memory (28) configured to temporary store the IQ data. At least one evaluation module (24) is provided that is configured to evaluate the IQ data. The at least one evaluation module ("4) is configured to pre-process the IQ data to extract radio frequency signal characteristic data. The at least one evaluation module (24) is configured to parse the radio frequency signal characteristic data by means of a density-based spatial clustering of applications with noise (DBSCAN) in order to determine clusters of points, thereby identifying inliers and outliers corresponding to anomalies in the radio frequency signal such that the at least one evaluation module (24) is enabled to predict an anomaly in the radio frequency signal in real-time.

## Description

The invention relates to a vehicle expansion box for implementation in a vehicle. Further, the invention relates to a vehicle.

Nowadays, many vehicles are connected wirelessly with each other or signal emitting entities, e.g. operation control centers, for exchanging information and/or control signals. The respective information or the control signals may be transmitted by means of radio frequency signals (RF signals), for instance signals that use cellular, satellite or other proprietary protocols. One specific use case concerns railway systems, as modern trains are remotely controlled by an operation control center by means of radio frequency signals.

However, the number of wireless communication entities in a respective environment increases due to an increasing number of vehicles communicating via radio frequency signals and due to other wireless communication entities such as mobile phones, tablets or other communication devices which may be located in the vehicle or its proximity. All of these different wireless communication entities transmit respective radio frequency signals which may result in interferences of the control signals used to control the respective vehicle. An occurring interference may result in disturbances of the communication of the vehicle, e.g. the respective controlling. In a worst case, the respective function associated with the wireless communication of the vehicle is disturbed, resulting in a stop of the vehicle, e.g. an emergency stop.

In the state of the art, it is known to use separately formed sensors to investigate the behavior of the respective vehicle, for instance a speed sensor, an accelerometer or similar sensors for sensing the movement of the vehicle. However, this results in additional costs.

Accordingly, there is a need for a cost-efficient and reliable manner in order to detect disturbing signals.

The invention provides a vehicle expansion box for implementation in a vehicle. The vehicle expansion box comprises a wireless module configured to receive a radio frequency signal. The wireless module is configured to generate IQ data (in-phase and quadrature data) based on the radio frequency signal received. The vehicle expansion box also comprises a recording module that is connected with the wireless module. The recording module has a first memory configured to temporary store the IQ data. In addition, the vehicle expansion box comprises at least one evaluation module that is configured to evaluate the IQ data. The at least one evaluation module is configured to pre-process the IQ data to extract radio frequency signal characteristic data. The at least one evaluation module is further configured to parse the radio frequency signal characteristic data by means of a density-based spatial clustering of applications with noise (DBSCAN) in order to determine clusters of points, thereby identifying inliers and outliers corresponding to anomalies in the radio frequency signal such that the at least one evaluation module is enabled to predict an anomaly in the radio frequency signal in real-time.

The invention ensures that the radio frequency environment comprising several radio frequency signals is analyzed directly so that potential threats to a signaling used for controlling the vehicle can be identified immediately, namely in real-time. A typical radio frequency environment will contain wanted signals, namely operation control signals that are used to control the vehicle, and different unwanted signals. The unwanted signal may provide a background noise, e.g. unwanted signals that are not strong and not persistent enough to cause a threat. Further, the unwanted signals may also provide a threat. For instance, they may comprise signals that can potentially interfere the signaling, namely the wanted signals, thereby providing the threat. Those signals are called interfering signals. Generally, these unwanted signals, which provide a threat, correspond to an anomaly in the radio frequency environment or rather anomalous signals. The vehicle expansion box, particularly the evaluation module, is enabled to identify the anomalous signals that may cause interferences with regard to the control signals, namely the wanted signals.

Accordingly, the radio frequency signals, namely the respective IQ data derived therefrom, are used for analyzing purposes such that no additional sensor is necessary that is used to monitor a movement of the vehicle itself in order to identify an anomalous movement of the vehicle. Thus, the costs can be reduced significantly even though the reliability of the detection is not impaired due to the evaluation module that is enabled to predict the anomalies in the radio frequency environment in real-time.

The density-base spatial clustering of applications with noise (DBSCAN) is used to group the radio frequency signal characteristic data. In fact, the respective radio frequency signal characteristic data can be labelled accordingly, wherein the respective labels depend on the grouping, e.g. the clusters provided due to the grouping.

Generally, the DBSCAN may group points that are closely packed, marking outliers points that lie alone in low-density regions of the database, namely the radio frequency signal characteristic data. Put differently, DBSCAN relates to a clustering algorithm, as the data points of the radio frequency signal characteristic data are labelled accordingly to respective clusters so that the labelled data set can be used for further processing, namely the anomaly detection.

Hence, the radio frequency signal characteristic data is prepared with respect to detection of an anomaly in the radio frequency signal, as anomalies are associated with outliers obtained by means of the grouping.

The wireless module and the recording module are connected with each other in a signal-transmitting matter. The recording module is configured to receive the IQ data generated by the wireless module in order to store the IQ data generated in the recording module, namely at least temporarily in the first memory.

Typically, the vehicle expansion box, particularly its wireless module, is implemented in or on the vehicle in addition to a main wireless module of the vehicle, which is used to transmit feedback signals and/or receive control signals. In other words, the wireless module of the vehicle expansion box relates to an additional wireless module that is used to verify signal interference of the main wireless module used for controlling.

Accordingly, the vehicle expansion box, particularly the wireless module, is configured to collect radio frequency signals that are received and/or sent by the respective vehicle. The wireless module generates IQ data associated with the respective radio frequency signal received, wherein the IQ data is used for further processing.

Generally, the vehicle expansion box may relate to a separately formed box that can be integrated in an already existing vehicle. Thus, the vehicle expansion box concerns an additional device that can be integrated afterwards, namely as a so-called add-on device for implementation.

In general, the IQ data is pre-processed by means of the at least one evaluation module, wherein a Fourier Transform, particularly a Fast Fourier Transform (FFT), is done so as to convert the IQ data to trace data. Then, the trace data obtained is further processed in order to extract the radio frequency signal characteristic data. Accordingly, the pre-processing of the IQ data comprises an intermediate step of performing the (Fast) Fourier transform in order to convert the IQ data to trace data for further processing.

An aspect provides that the wireless module is configured to scan an environmental frequency spectrum, wherein the evaluation module is configured to identify a wanted radio frequency signal and/or an unwanted radio frequency signal in the environmental frequency spectrum scanned by the wireless module. Particularly, the wanted radio frequency signal corresponds to a control signal for controlling the vehicle. The unwanted signal may result in background noise that can be neglected, but also in interfering signals causing anomalies. As mentioned above, the environmental frequency spectrum or rather the radio frequency environment contains several different radio frequency signals that originate from different radio frequency entities, namely the operation control center that controls the vehicle, and/or other wireless entities that communicate with different entities, thereby providing background noise to the vehicle controlling system or rather interfering signals, resulting in anomalies that may disturb the communication of the vehicle. However, the evaluation module is enabled to distinguish between the different types of signals that are provided in the radio frequency environment.

Another aspect provides that the radio frequency signal characteristic data comprises different kinds of radio frequency signal characteristics. Thus, the radio frequency signal characteristic data obtained by pre-processing the IQ data may comprise different types or rather kinds of characteristics of the radio frequency signal.

For instance, the radio frequency signal characteristic data comprises a center frequency, a maximum power, a bandwidth, and/or a phase noise, for instance a left phase noise or a right phase noise. These characteristics correspond to the different kinds of radio frequency signal characteristics that are obtained when pre-processing the IQ data generated by the wireless module.

A further aspect provides that the at least one evaluation module is configured to collate outliers on multiple projected axes together in order to predict the anomaly in the radio frequency signal. Particularly, the at least one evaluation module is configured to iteratively perform density-based spatial clustering of applications with noise (DBSCAN) on a two-dimensional projected space between each kind of the radio frequency signal characteristic data against frequency. The two-dimensional projected space may be obtained between each of the different kinds of the radio frequency signal characteristic data versus frequency, namely maximum power versus frequency, bandwidth versus frequency, phase noise versus frequency and/or center frequency versus frequency. The respective outliers in each of the two-dimensional projected spaces may be collated to allow for a prediction of an anomaly in the radio frequency environment.

Generally, this allows to distinguish between anomalous radio frequency signals and non-anomalous radio frequency signals in the radio frequency spectrum scanned by the wireless module.

According to another aspect, the evaluation module comprises a neural network that is configured to receive an input feature set that is associated with the radio frequency signal characteristic data. The different features of the input feature set may be associated with the different kinds of the radio frequency signal characteristic data. The neural network corresponds to an artificial neural network. In fact, the neural network is used to evaluate the different features inputted, namely the different kinds of the radio frequency signal characteristic data, in order to identify correlations and/or independencies of the respective features. In fact, a respective model is built and deployed in order to identify an anomaly in the radio frequency environment scanned. In other words, a (machine learning) model is designed and trained so as to distinguish between wanted signals, background noise and interfering signals that cause anomalies. In fact, the model is trained by using the radio frequency signal characteristic data gathered when pre-processing the IQ data, namely performing the (Fast) Fourier Transform on the raw IQ data, thereby obtaining trace data that is further processed in order to extract the radio frequency signal characteristic data. The neural network may comprise the density-based spatial clustering of applications with noise algorithm.

Hence, the neural network corresponds to a classifier neural network, wherein classes are outputted by the neural network, which provide respective probabilities concerning the radio frequency spectrum.

For instance, the neural network is a feed-forward network with one input layer, N hidden layers and one output layer. Particularly, a rectified linear unit (ReLU) activation function is provided and/or the final hidden layer comprises a softmax activation function. The respective embodiment of the neural network is an exemplary one that can be used for classifying purposes based on the input feature set. However, alternative suitable neural networks can also be implemented that ensure to classify the input data appropriately.

In fact, the rectified linear unit (ReLU) activation function corresponds to an activation function defined as the positive part of its argument. The softmax activation function corresponds to a mathematical function that converts a vector of numbers into a vector of probabilities, where the probabilities of each value are proportional to the relative scale of each value in the vector.

A further aspect provides that the neural network is configured to output a probability vector. The probability vector may provide a respective probability for the different classes provided by the classifier neural network. Thus, information concerning the respective probability of a certain class provided in the radio frequency environment can be outputted.

According to another aspect, the neural network is a pre-trained neural network that is reinforced during operation of the vehicle expansion box. This may be done based on IQ data that has already been pre-processed, namely the radio frequency signal characteristic data.

For instance, at an initial stage, when the (machine-learning) model provided by the neural network is empty, the radio frequency signal characteristic data obtained when pre-processing the IQ data is used to train the model. When the (machine-learning) model has sufficient data to form clusters, the received radio frequency data will be used to further train the model and additionally to predict if there is an anomaly in the radio frequency data received.

Put differently, the model may be reinforced during operation while already predicting if there is an anomaly in the radio frequency spectrum scanned.

In general, the respective (machine-learning) model provided is trained to differentiate among the different types of radio frequency signals, namely wanted signals and unwanted signals, e.g. those that may cause anomalies, namely interfering signals.

Another aspect provides that the recording module also has a second memory configured to permanently store the IQ data. The second memory differs from the first memory that is only used to temporary store the IQ data. For instance, the first memory relates to a buffer memory, namely a first in first out (FIFO) circular buffer memory, also called ring buffer. Contrary to the first memory, the second memory is used to permanently store the IQ data for further investigation.

Particularly, the at least one evaluation module is configured to control a transfer of the IQ data from the first memory to the second memory based upon an output result. Particularly, the transfer is controlled in case an anomaly is identified by the at least one evaluation module. In other words, the evaluation module controls the transfer of the IQ data from the first memory, namely the temporary storing memory, to the second memory, namely the permanently storing memory, provided that an anomaly has been identified by means of the evaluation module that is enabled to evaluate the IQ data in real-time.

The evaluation module may trigger a download of the IQ data from the first memory to the second memory when an anomaly is detected in the data processed by the evaluation module. The download may correspond to a data shift from the first memory to the second memory (with deleting the respective IQ data from the first memory), which results in the transfer of the IQ data from the first memory to the second memory.

Alternatively, the evaluation module controls the recording module to copy the IQ data from the first memory into the second memory for permanently storing the IQ data. Hence, the evaluation module has access to the recording module, for instance read access and write access. The evaluation module may copy the IQ data from the first memory into the second memory for permanently storing the IQ data. This also results in the transfer of the IQ data from the first memory to the second memory.

The respective evaluation is done by means of pre-processing the IQ data so as to obtain input features and processing the pre input features by means of the neural network, e.g. by feeding a respective (machine-learning) model with the features obtained when pre-processing the IQ data.

Generally, the evaluation module is enabled to identify a certain situation, e.g. an anomaly in the radio frequency spectrum scanned, that triggers the recording module to permanently store the IQ data, e.g. by transferring the corresponding IQ data from the first memory to the second memory. Put differently, the evaluation module controls the transfer of the IQ data from the first memory used for temporarily storing the IQ data to the second memory for permanently storing the IQ data. The transfer of the IQ data takes place when a certain event may be detected in the IQ data processed by the evaluation module, namely an anomaly predicted in the radio frequency environment.

In fact, the first memory is configured to store a certain amount of IQ data that can be shifted or rather copied to the second memory based on a control signal issued by the evaluation module.

Accordingly, the evaluation module may provide a machine learning model that processes the radio frequency signal characteristic data, namely the IQ data that has been pre-processed, in order to predict whether an anomaly is contained in the radio frequency environment scanned. The machine learning model is trained in an unsupervised manner.

In fact, each radio frequency signal extracted from the frequency spectrum by means of the wireless module will be characterized with the following attributes in order to train the (machine learning) model and to predict an anomaly in the frequency spectrum accordingly.

The respective attributes may concern operation frequency, also called center frequency, namely the frequency at which the respective signal strength is the strongest. Further, the attributes may concern a bandwidth, e.g. -6 or -12 dB from the maximum power. The attributes may also concern a phase noise, namely an area under the respective curve gathered. In addition, the attributes may concern a maximum power, namely the tip of the signal received. These different attributes will be fed into the neural network for training and prediction purposes.

Another aspect provides that the vehicle expansion box comprises an outer housing that encompasses the wireless module, the recording module and the at least one evaluation module. The wireless module may comprise a receiver that is connected with a separately formed sensor interface, for instance an antenna. The separately formed interface may be located at an outer surface of the housing or rather located outside of the housing in order to ensure good receiving properties. Therefore, the vehicle expansion box is a single device that may protect its internal components from environmental impacts.

The vehicle expansion box may also be called radio signal recorder, as it stores the IQ data associated with radio frequency signals received permanently in case of an occurring event in the IQ data processed, namely an anomaly in the radio frequency spectrum scanned.

Generally, this helps an operator to identify an interference source quickly and easily that may cause the anomaly, namely the occurring event based on which the permanent storing of the IQ data is triggered.

Accordingly, the evaluation module receives the real time IQ data and decides for each kind of radio frequency signal characteristic data if it is normal or abnormal and controls the transfer of the abnormal data to the second memory.

Moreover, a time and/or spatial dependence persistent abnormal detection may be established. For a time dependence persistent abnormal detection, a 1D temporal convolutional network may be used, whereas for a persistent abnormal detection a N-D convolutional network may be used.

Furthermore, the invention provides a vehicle that has a main wireless module for receiving radio frequency control signals used to control the vehicle. The vehicle also comprises the vehicle expansion box described above. Particularly, the vehicle is autonomously operated at least partly by means of the radio frequency control signals. As mentioned above, the vehicle expansion box is used to verify the spectrum received by the main wireless module so as to detect any anomalies that may disturb the communication between the vehicle, particularly the main wireless module, and a control center that sends radio frequency control signals to the vehicle, namely the main wireless module.

The main wireless module of the vehicle may be connected with an electronic control unit (ECU) of the vehicle. Accordingly, the wireless module of the vehicle expansion box is an additional wireless module within the vehicle, which is used to verify the operation of the main wireless module.

An aspect provides that the vehicle is a train, a car, a drone, a plane and/or a ship. Accordingly, different remotely controlled vehicles may be additionally equipped with the vehicle expansion box so as to verify the radio frequency environment of the vehicle.

Generally, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

It is to be understood that a module may be established by a single electronic device or even by a portion of a single electronic device. However, a module may also be established by a plurality of electronic devices that are interconnected, e.g. a network of electronic devices.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an embodiment of a vehicle according to the invention, which comprises an integrated vehicle expansion box according to the invention,
- Figure 2 shows a schematic overview of a vehicle expansion box according to the invention, and
- Figure 3 schematically shows a flow-chart illustrating the data processing by means of the vehicle expansion box according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

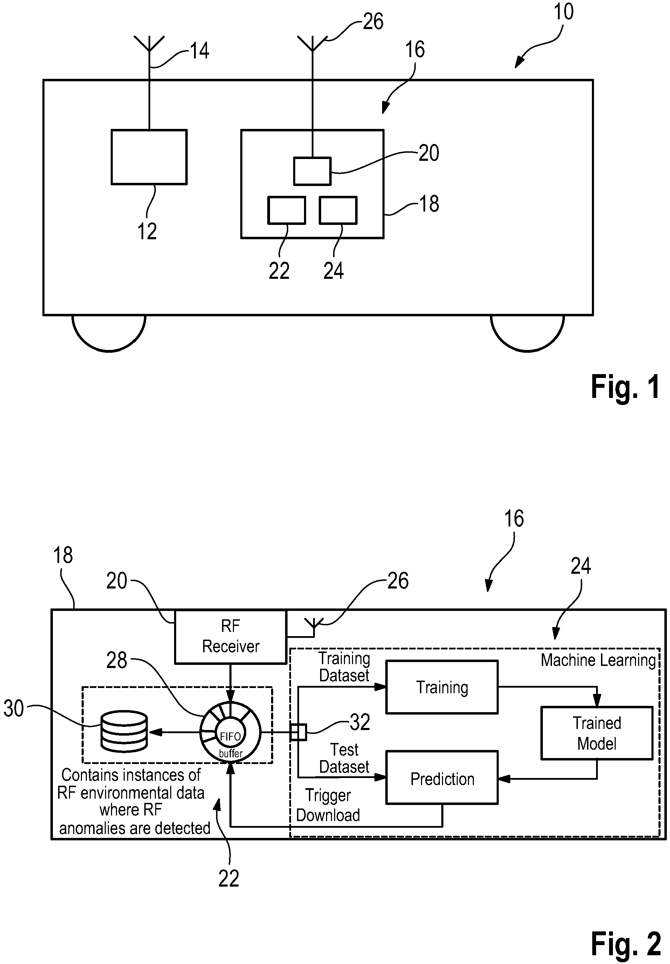

Figure 1 shows a vehicle 10 that is established as a train. Alternatively, the vehicle 10 may be a car, a drone, a ship and/or a plane.

The vehicle 10 comprises a main wireless module 12 that is used for receiving radio frequency control signals from an operation control center that controls the vehicle 10 in a remote manner by means of the radio frequency control signals. The main wireless module 12 may also be configured to transmit radio frequency signals from the vehicle 10 to the operation control center appropriately.

The main wireless module 12 is connected with an antenna 14 that is used for receiving and/or transmitting radio frequency signals.

Accordingly, the vehicle 10 is at least partly autonomously operated by means of the radio frequency control signals, as the operation control center controls the vehicle 10 via the radio frequency signals.

In addition, the vehicle 10 comprises a vehicle expansion box 16 that has been implemented on the vehicle 10 afterwards.

The vehicle expansion box 16 comprises a housing 18 which accommodates a wireless module 20, a recording module 22 and an evaluation module 24. The wireless module 20 is connected with a sensor interface 26 that may be established as an antenna.

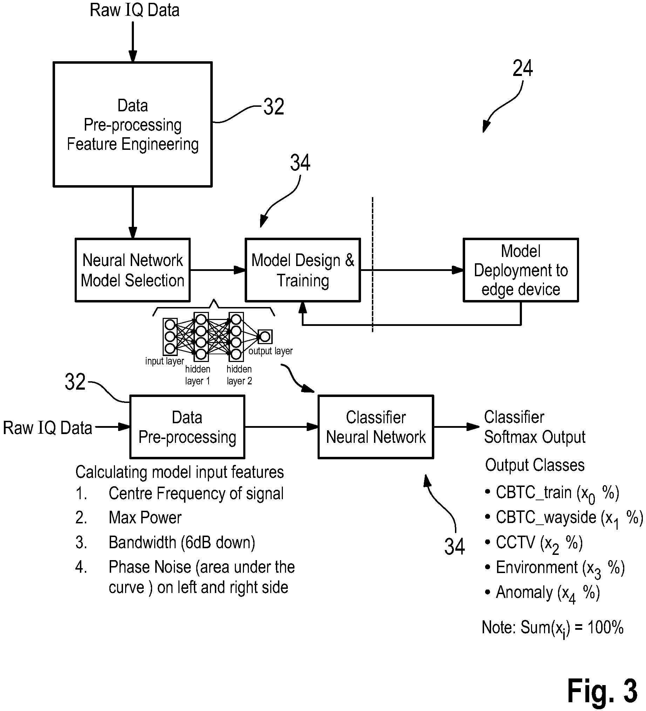

Accordingly, the vehicle 10 comprises two wireless modules 12, 20, wherein the wireless module 20 of the vehicle expansion box 16 is an additional one that is used to scan the frequency spectrum, namely the radio frequency environment, of the vehicle 10 in order to verify if any anomalies in the radio frequency spectrum occur that may disturb the controlling of the vehicle 10. This will be explained hereinafter in more detail when referring to Figures 2 and 3 showing the vehicle expansion box 16 in more detail as well as the data processing performed by the vehicle expansion box 16.

Figure 2 shows that the recording module 22 comprises a first memory 28 that is connected with the wireless module 20 as well as the evaluation module 24. The first memory 28 is established by a circular buffer, particularly a first-in first out (FIFO) buffer.

In addition, the recording module 22 has a second memory 30 that is connected with the first memory 28.

Thus, data stored in the first memory 28 can be transferred to the second memory 30 as will be explained later in more detail. Generally, the first memory 28 is configured to temporarily store data, whereas the second memory 30 is configured to store data in a permanent manner.

The vehicle expansion box 16 is configured to scan an environmental frequency spectrum of the vehicle 10, which is done by means of the wireless module 20 that receives radio frequency signals via the sensor interface 26.

The wireless module 20 processes the radio frequency signals received so as to generate IQ data. The IQ data is forwarded to the recording module 22, particularly the first memory 28 that is configured to temporarily store the IQ data.

The IQ data obtained is also forwarded to the evaluation module 24 that evaluates the IQ data in order to identify a certain anomaly in the radio frequency spectrum scanned by the wireless module 20.

In case the evaluation module 24 has identified an anomaly in the radio frequency signal, the evaluation module 24 controls a transfer of the IQ data from the first memory 28 to the second memory 30.

For instance, a download of the temporarily stored IQ data is triggered by means of the evaluation module 24 provided that the evaluation module 24 predicts an anomaly in the radio frequency spectrum scanned so as to permanently store the respective IQ data associated with the anomaly.

Thus, the second memory 30 contains instances of radio frequency environmental data where anomalies are detected.

The respective transfer/download may be associated with a data shift from the first memory 28 to the second memory 30 or rather a copying function of the respective IQ data.

In any case, the transfer of the IQ data is controlled based upon an output result of the evaluation module 24 that processes the IQ data, namely the respective data set of the radio frequency signal, which is also called radio frequency data.

In fact, the evaluation module 24 receives the real time IQ data and decides for each kind of radio frequency signal characteristic data if it is normal or abnormal and controls the transfer of the abnormal data to the second memory 30.

The respective evaluation of the IQ data obtained is done by means of the evaluation module 24 that comprises a stage of pre-processing the IQ data obtained and classifying the pre-processed data as will be described hereinafter in more detail when referring to Figure 3.

First, the wireless module 20 scans the environmental frequency spectrum of the vehicle 10 wherein the evaluation module 24 identifies a wanted radio frequency signal and/or an unwanted radio frequency signal that may correspond to an interfering radio frequency signal causing an anomaly. The wanted radio frequency signal may correspond to a control signal for controlling the vehicle 10, which has been emitted by the operation control center.

The wireless module 20 generates IQ data that is pre-processed in a pre-processing stage 32 of the evaluation module 24 so as to extract radio frequency signal characteristic data from the raw IQ data. This is also called feature engineering, as features are extracted.

For this purpose, the raw IQ data generated by the wireless module 20 is converted to trace data, namely radio frequency trace data, by using a (Fast) Fourier Transform. This converting step is done in the pre-processing stage 32 of the evaluation module 24.

The trace data obtained, namely radio frequency trace data, is further processed by means of the pre-processing stage 32 of the evaluation module 24 so as to extract the radio frequency signal characteristic data. In other words, features are extracted from the trace data obtained, namely radio frequency trace data, so as to provide the radio frequency signal characteristic data that are outputted by the pre-processing stage 32 of the evaluation module 24.

The respective radio frequency signal characteristic data may comprise different kinds of radio frequency signal characteristics such as a center frequency, a maximum power, a bandwidth and/or a phase noise as indicated in Figure 3.

These respective radio frequency signal characteristic data may be used as model input features for a subsequent artificial neural network 34 of the evaluation module 24 as shown in Figure 3.

In fact, the evaluation module 24 comprises a density-based spatial clustering of application with noise (DBSCAN) function that is applied on the radio frequency signal characteristic data in order to parse the respective data.

This ensures that the respective data is clustered into radio frequency signals corresponding to normal data and anomalous data, respectively.

Thus, clusters of points can be determined, thereby identifying inliers and outliers that correspond to anomalies in the radio frequency signal. Put differently, a labelled data set is obtained that is used for further processing.

The respective clustering ensures that the evaluation module 24 generally, particularly the neural network 34 of the evaluation module 24, is enabled to predict an anomaly in the radio frequency signal in real-time.

The neural network 34 provides a (machine-learning) model that is trained by the input feature set that is associated with the radio frequency signal characteristic data, particularly the labelled data set. As shown in Figure 3, the model input features may form the input feature set that is inputted into the respective mode.

The (machine-learning) model together with the DBSCAN establishes a classifier neural network.

The neural network 34 receives an input feature set that is associated with the radio frequency signal characteristic data, wherein the input feature set corresponds to the different kinds of the radio frequency signal characteristic data as illustrated in Figure 3.

The neural network 34 comprises an input layer, N hidden layers and one output layer, wherein at least several of the N hidden layers comprise rectified linear unit (ReLU) activation functions, particularly all hidden layers or all hidden layers except for the final hidden layer that is connected with the output layer.

Additionally, the final hidden layer comprises a softmax activation function so as to provide probabilities for the different classes provided by the (classifier) neural network 34. Thus, the neural network 34 outputs a probability vector that defines the respective probability of different output classes as shown in Figure 3.

The softmax activation function returns a probability vector of the input data falling in one of the defined output classes, wherein its sum equals 100% as shown in Figure 3 for different classes, e.g. uplink control signals, downlink control signals and other arbitrary signals. According to a specific embodiment, these classes may also relate to CBTC_train, CBTC_wayside, CCTV, environment, and anomaly. Generally, more than the above-mentioned output classes may be provided.

In other words, the (classifier) neural network 34 is generally enabled to classify the respective data while processing the input features appropriately

In general, the DBSCAN identifies outliers in the data. The respective outliers on multiple projected axes are collated together in order to predict the anomaly in the radio frequency signal.

In fact, the density-based spatial clustering of applications with noise (DBSCAN) is iteratively performed on a two-dimensional projected space, which is obtained between each kind of the radio frequency signal characteristic data against the frequency, namely center frequency against frequency, maximum power against frequency, bandwidth against frequency as well as phase noise against frequency.

Accordingly, for each of the different two-dimensional projected spaces, the respective outliers are identified and collated so as to predict whether an anomaly is provided in the radio frequency spectrum scanned.

The neural network 34 applies a respective anomaly detection model that is designed and trained, particularly based on the radio frequency signal characteristic data, to identify correlations/independencies of the input features when evaluating the respective features by means of the different layers so as to detect an anomaly in the data processed, namely the radio frequency signal characteristic data obtained when pre-processing the IQ data gathered by scanning the radio frequency spectrum. The neural network 34 examines the input feature set to get a sense of the behavior of the IQ data, thereby identifying correlation between the respective features obtained when pre-processing the IQ data generated.

In general, the neural network 34 may be trained by means of unsupervised learning.

Accordingly, the evaluation module 24 is generally enabled to directly analyze the radio frequency signals, namely the data obtained from the radio frequency signals scanned, so as to identify an anomaly in the radio frequency spectrum of the vehicle 10.

Put differently, the evaluation module 24 is enabled to predict an anomaly in the RF environment so as to trigger the recording module 22 to transfer the IQ data from the first memory 28 to the second memory 30 for further processing, e.g. investigation of the interference source.

As shown in Figure 2, the radio frequency data itself is used to train the (machine learning) model provided by the neural network 34. The radio frequency environment typically contains wanted signals and unwanted signals, wherein the latter ones may potentially cause interferences. The respective model will be trained to differentiate among these different types of radio frequency signals.

The training and the respective prediction is done in real-time.

At the beginning, when the model is empty, the received data will be used to train the model appropriately, namely the radio frequency signal characteristic data obtained by the pre-processing stage 32 that pre-processes the IQ data generated by the wireless module 20.

Once the model has sufficient data to form clusters, e.g. by means of DBSCAN, the received data will be used to reinforce the model, namely to further train the model, and additionally to predict if there is an anomaly in the radio frequency spectrum scanned.

Thus, the radio frequency signal characteristic data during operation may provide a training dataset and a test dataset simultaneously as the trained model is reinforced during operation as indicated in Figure 2.

Generally, the evaluation module 24 may be configured to perform a time and/or spatial dependence persistent abnormal detection. For a time dependence persistent abnormal detection, a 1 D temporal convolutional network may be used, whereas for a persistent abnormal detection a N-D convolutional network may be used.

Accordingly, the IQ data itself, particularly the radio frequency signal characteristic data obtained from the IQ data due to the pre-processing, is used to train the model and to predict an anomaly by means of the trained model, as the trained model is trained to differentiate among anomalous radio frequency signals and normal radio frequency signals, e.g. wanted signals and background noise not causing any interferences.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A vehicle expansion box for implementation in a vehicle (10), the vehicle expansion box (16) comprising:
- a wireless module (20) configured to receive a radio frequency signal, wherein the wireless module (20) is configured to generate IQ data based on the radio frequency signal received,
- a recording module (22) connected with the wireless module (20), wherein the recording module (22) has a first memory (28) configured to temporary store the IQ data, and
- at least one evaluation module (24) that is configured to evaluate the IQ data,
wherein the at least one evaluation module (24) is configured to pre-process the IQ data to extract radio frequency signal characteristic data, and
wherein the at least one evaluation module (24) is configured to parse the radio frequency signal characteristic data by means of a density-based spatial clustering of applications with noise (DBSCAN) in order to determine clusters of points, thereby identifying inliers and outliers corresponding to anomalies in the radio frequency signal such that the at least one evaluation module (24) is enabled to predict an anomaly in the radio frequency signal in real-time.

2. The vehicle expansion box according to claim 1, wherein the wireless module (20) is configured to scan an environmental frequency spectrum, and wherein the evaluation module (24) is configured to identify a wanted radio frequency signal and/or an unwanted radio frequency signal in the environmental frequency spectrum scanned by the wireless module (20), in particular wherein the wanted radio frequency signal corresponds to a control signal for controlling the vehicle (10).

3. The vehicle expansion box according to claim 1 or 2, wherein the radio frequency signal characteristic data comprises different kinds of radio frequency signal characteristics.

4. The vehicle expansion box according to any of the preceding claims, wherein the radio frequency signal characteristic data comprises a center frequency, a maximum power, a bandwidth, and/or a phase noise.

5. The vehicle expansion box according to any of the preceding claims, wherein the at least one evaluation module (24) is configured to collate outliers on multiple projected axes together in order to predict the anomaly in the radio frequency signal, in particular wherein the at least one evaluation module (24) is configured to iteratively perform density-based spatial clustering of applications with noise on a two-dimensional projected space between each kind of the radio frequency signal characteristic data against frequency.

6. The vehicle expansion box according to any of the preceding claims, wherein the evaluation module (24) comprises a neural network (34) that is configured to receive an input feature set that is associated with the radio frequency signal characteristic data, in particular wherein the different features of the input feature set are associated with the different kinds of the radio frequency signal characteristic data.

7. The vehicle expansion box according to claim 6, wherein the neural network (34) is a feed-forward network with one input layer, N hidden layers and one output layer, in particular wherein a rectified linear unit (ReLU) activation function is provided and/or wherein the final hidden layer comprises a softmax activation function.

8. The vehicle expansion box according to claim 6 or 7, wherein the neural network (34) is configured to output a probability vector.

9. The vehicle expansion box according to any of claims 6 to 8, wherein the neural network (34) is trained by means of unsupervised learning.

10. The vehicle expansion box according to any of claims 6 to 9, wherein the neural network (34) is a pre-trained neural network that is reinforced during operation of the vehicle expansion box (16).

11. The vehicle expansion box according to any of the preceding claims, wherein the recording module (22) also has a second memory (30) configured to permanently store the IQ data.

12. The vehicle expansion box according to claim 11, wherein the at least one evaluation module (24) is configured to control a transfer of the IQ data from the first memory (28) to the second memory (30) based upon an output result, particularly in case an anomaly is identified by the at least one evaluation module (24).

13. The vehicle expansion box according to any of the preceding claims, wherein the vehicle expansion box (16) comprises an outer housing (18) that encompasses the wireless module (20), the recording module (22) and the at least one evaluation module (24).

14. A vehicle with a main wireless module (12) for receiving radio frequency control signals used to control the vehicle (10), wherein the vehicle (10) also comprises the vehicle expansion box (16) according to any of the preceding claims, in particular wherein the vehicle (10) is autonomously operated at least partly by means of the radio frequency control signals.

15. The vehicle according to claim 14, wherein the vehicle (10) is a train, a car, a drone, a plane and/or a ship.
